# EUROPÄISCHE PATENTSCHRIFT

(11) **EP 2 549 444 B1**
(45) Veröffentlichungstag und Bekanntmachung des Hinweises auf die Patenterteilung: **25.02.2015**
(21) Anmeldenummer: 12176949.1
(22) Anmeldetag: 18.07.2012
(51) Int. Cl.: G07C 9/00, H01M 2/10, B60R 25/00, E05B 19/04, H05K 5/00

(54) **Elektronischer Schlüssel für ein Sicherheitssystem mit einem Mechanismus zum Loslösen eines Batteriefachdeckels**
Electronic key for a security system with a mechanism to loosen a battery compartment cover
Clé électronique pour un système de sécurité avec un mécanisme de détachement du couvercle du compartiment à batterie

(30) Priorität: 22.07.2011 DE 102011052079
(43) Veröffentlichungstag der Anmeldung: 23.01.2013
(73) Patentinhaber: Huf Hülsbeck & Fürst GmbH & Co. KG, 42551 Velbert (DE)
(72) Erfinder: Porada, Martin, 42109 Wuppertal (DE)
(74) Vertreter: Vogel, Andreas

(56) Entgegenhaltungen:
- DE-A1- 10 118 430
- DE-A1- 19 605 201
- DE-A1-102005 015 085
- DE-A1-102006 046 802
- DE-A1-102007 017 493

## Beschreibung

Die Erfindung betrifft einen elektronischen Schlüssel für ein Sicherheitssystem, das insbesondere ein Zugangskontrollsystem und/oder Fahrberechtigungskontrollsystem umfasst, eines Kraftfahrzeuges, mit einem Gehäuse, innerhalb dessen eine Elektronik zur drahtlosen Kommunikation mit dem Sicherheitssystem angeordnet ist, einem innerhalb des Gehäuses ausgebildeten Aufnahmefach, in dem ein Energiespeicher zur elektrischen Energieversorgung der Elektronik eingesetzt ist, einem Deckel, der am Gehäuse lösbar befestigt ist und das Aufnahmefach in einer eingesetzten Position des Deckels abdichtend verschließt, und einer am Gehäuse ausgebildeten Aufnahme, in der ein mechanischer Schlüssel aufgenommen ist.

In der DE 10 2006 023 143 ist ein elektronischer Schlüssel offenbart, der ein Gehäuse aufweist, in das ein Energiespeicher eingesetzt ist. Innerhalb des Gehäuses ist zudem eine Elektronikeinheit für eine Datenkommunikation mit einer Schließvorrichtung eines Kraftfahrzeuges vorgesehen. Falls der Energiespeicher auszutauschen ist, kann ein am Gehäuse befestigter Deckel gelöst werden, sodass der Benutzer den Energiespeicher aus dem Gehäuse entnehmen kann und einen neuen Energiespeicher in das Gehäuse einsetzen kann. Anschließend erfolgt die Befestigung des Deckels am Gehäuse, um die innerhalb des Gehäuses liegende Elektronik einschließlich Energiespeicher wirkungsvoll von der Außenwelt abzukapseln, insbesondere abzudichten. Nachteiligerweise hat sich gezeigt, dass für das Lösen des Deckels beispielsweise Hilfswerkzeuge zum Einsatz kommen, wodurch etwaige Beschädigungen an der Gehäuseoberfläche des elektronischen Schlüssels entstehen können.

Die DE 102 006 046 802 A1 zeigt ein Gehäuse für einen elektronischen Funkschlüssel, welcher über ein Batteriefach verfügt, welches zum Batteriewechsel geöffnet werden kann.

Es ist Aufgabe der vorliegenden Erfindung, einen elektronischen Schlüssel zu schaffen, bei dem die genannten Nachteile vermieden werden, insbesondere ein elektronischer Schlüssel bereit gestellt wird, der ein einfaches Lösen des Batteriefachdeckels ermöglicht, ohne etwaige sichtbare Beschädigungen am Gehäuse entstehen zu lassen und dabei ein unbeabsichtigtes Öffnen des Deckels zu vermeiden.

Zur Lösung dieser Aufgabe wird ein elektronischer Schlüssel mit den Merkmalen des Anspruches 1 vorgeschlagen. In den abhängigen Ansprüchen sind bevorzugte Weiterbildungen ausgeführt.

Dazu ist erfindungsgemäß vorgesehen, dass ein Mechanismus derart innerhalb der Aufnahme angeordnet ist, dass über eine Bewegung des mechanischen Schlüssels innerhalb der Aufnahme der Mechanismus betätigbar ist, wodurch ein Loslösen des Deckels vom Gehäuse erzielbar ist. Der besondere Vorteil der Erfindung ist, dass der Mechanismus innerhalb des Gehäuses angeordnet ist, der im nicht sichtbaren Bereich für den Benutzer sich befindet. Über eine definierte Bewegung des mechanischen Schlüssels kann der nicht sichtbare Mechanismus entsprechend aktiviert werden, um ein Loslösen des Deckels vom Gehäuse zu erreichen. Zudem ist der Mechanismus mit dem mechanischen Schlüssel sowie dessen Bewegung derart abgestimmt, dass ohne jegliche Beschädigungen der Deckel komfortabel vom Benutzer losgelöst werden kann.

Es ist eine Dichtung zwischen dem Deckel und dem Gehäuse angeordnet, wobei in der eingesetzten Position des Deckels die Dichtung eine derartige Kraft am Gehäuse ausübt, dass nach Aktivierung des Mechanismus der Deckel zumindest teilweise vom Gehäuse sich löst, insbesondere vom Gehäuse herausspringt. Die Dichtung stellt somit zumindest ein Bestandteil des Mechanismus dar, der bewirkt, dass aufgrund der von der Dichtung wirkenden Kraft der Deckel sich "von selbst" vom Gehäuse löst, falls der Mechanismus über die Bewegung des mechanischen Schlüssels aktiviert bzw. betätigt wurde. Somit hat die Dichtung zwei Funktionen. Zum Einen dichtet die Dichtung den Innenbereich des Gehäuses, insbesondere das Aufnahmefach des Gehäuses ab, in dem der Energiespeicher sowie zumindest teilweise die Elektronik sich befindet. Zum Anderen dient die Dichtung dafür, dass nach Aktivierung des Mechanismus über die Dichtung der Deckel sich zumindest teilweise selbstständig vom Gehäuse löst und/oder trennt. Die Dichtung kann zum einen deckelseitig und/oder am Gehäuse verlaufen. Beispielhaft ist die Dichtung am Deckel und/oder am Gehäuse angespritzt, so dass die Dichtung mit dem Deckel und/oder dem Gehäuse ein monolithisches Bauteil bilden können.

Vorzugsweise kann der Mechanismus ein federndes Rastelement aufweisen, das einen Kopfbereich aufweist, der in der eingesetzten Position des Deckels in der Aufnahme befestigt ist. Über eine definierte Bewegung des mechanischen Schlüssels in der Aufnahme kann das Rastelement bewegt werden und zwar in eine derartige Position, dass die Befestigung des Deckels am Gehäuse aufgehoben ist. Anschließend kann der Deckel leichtgängig vom Gehäuse entfernt werden. In einer möglichen Ausführungsform der Erfindung kann der Kopfbereich zumindest teilweise in die Aufnahme hineinragen, in der auch der mechanische Schlüssel sich befindet. Über eine definierte Bewegung des mechanischen Schlüssels kann dieser mit einer bestimmten Kraft auf den Kopfbereich wirken, sodass das Rastelement mit dem Kopfbereich aus der Aufnahme und somit aus einer Rastposition bewegt werden kann. Ist die Rastposition des Rastelementes mit seinem Kopfbereich verlassen, erfolgt ein Loslösen des Deckels vom Gehäuse.

Ebenfalls kann vorgesehen sein, dass der mechanische Schlüssel zwischen einer eingeführten Position und einer Arbeitsposition innerhalb der Aufnahme bewegbar ist, wobei in der Arbeitsposition der mechanische Schlüssel teilweise aus der Aufnahme herausragt, wobei in der Arbeitsposition der Mechanismus zum Lösen des Deckels aktivierbar ist. In der eingeführten Position hat der mechanische Schlüssel keine Funktion. Er wird von der Aufnahme zuverlässig innerhalb des Gehäuses des elektronischen Schlüssels gehalten. Erst wenn es nötig ist, den mechanischen Schlüssel nutzen zu müssen, beispielsweise wenn die Fahrzeugelektronik ausgefallen ist, kann der mechanische Schlüssel aus dem Gehäuse des elektronischen Schlüssels komplett herausgezogen werden, um das Sicherheitssystem des Kraftfahrzeuges mechanisch zu betätigen. Die Arbeitsposition des mechanischen Schlüssels ist bei der vorliegenden Erfindung dadurch definiert, dass der mechanische Schlüssel nicht komplett aus der Aufnahme herauszuziehen ist. Das bedeutet, dass die Arbeitsposition des mechanischen Schlüssels dann erreicht wird, wenn zumindest teilweise der mechanische Schlüssel aus der Aufnahme herausragt. Diese Arbeitsposition ist bei der vorliegenden Erfindung eindeutig, denn an dieser Arbeitsposition kann der Mechanismus zum Lösen des Deckels aktiviert werden.

Beispielsweise ist es denkbar, dass das Gehäuse und/oder die Aufnahme für den mechanischen Schlüssel derart ausgeführt ist, dass der Benutzer eine haptische Rückmeldung erhält, wann die Arbeitsposition des Schlüssels erreicht ist. Alternativ und/ oder zusätzlich kann am mechanischen Schlüssel eine Markierung vorgesehen sein, die der Benutzer visuell erst dann erkennen kann, falls der mechanische Schlüssel genügend weit aus dem Gehäuse bzw. aus der Aufnahme des Gehäuses herausgezogen ist. Erst dann ist die Arbeitsposition des mechanischen Schlüssels erreicht.

Ebenfalls kann vorteilhaft sein, dass der Kopfbereich des Rastelementes beabstandet zum in der eingeführten Position des sich befindenden mechanischen Schlüssels ist. Um die Arbeitsposition des mechanischen Schlüssels zuverlässig und störungsfrei zu erreichen, ist es vorteilhaft, dass der Kopfbereich einen definierten Abstand zum mechanischen Schlüssel aufweist, sodass es zu keinen etwaigen Kollisionen beim Bewegen des mechanischen Schlüssels aus der eingeführten Position in seiner Arbeitsposition kommt.

Zudem ist die Aufnahme derart ausgeführt, dass der mechanische Schlüssel innerhalb der Aufnahme zumindest teilweise drehbar und/oder schwenkbar und/oder kippbar ist, insbesondere um eine Achse drehbar ist, die entlang der

Längserstreckung der Aufnahme verläuft. Die Arbeitsposition kann beispielsweise über eine lineare und/oder translatorische Bewegung des mechanischen Schlüssels innerhalb der Aufnahme erreicht werden. Ist die Arbeitsposition des mechanischen Schlüssels erreicht, kann der mechanische Schlüssel über ein Drehen und/oder Schwenken und/oder Kippen und/oder eine translatorische Bewegung dem Mechanismus betätigen, insbesondere eine definierte Kraft auf das Rastelement ausgeübt werden, wodurch die Befestigung des Rastelementes an der Aufnahme des Gehäuses gelöst wird. Folglich kann der Deckel sich vom Gehäuse zuverlässig lösen.

Ebenfalls ist es denkbar, dass die Aufnahme als Kanal oder als Kammer ausgebildet ist, wobei der mechanische Schlüssel entlang der Längserstreckung der Aufnahme linear bewegbar ist und die Aufnahme derart ausgeführt ist, dass der mechanische Schlüssel in einer definierten, innerhalb der Aufnahme eingeführten Position eine Aktivierung des Mechanismus bewirkt. Beispielsweise ist es denkbar, dass der Mechanismus zum Loslösen des Deckels dann aktiviert wird, wenn der Schlüssel genügend weit aus der Aufnahme herausgezogen ist. In einer weiteren Ausführungsform der Erfindung kann es vorgesehen sein, dass zunächst die herausgezogene Position des Schlüssels zu erreichen ist, die gemäß der vorliegenden Erfindung auch als Arbeitsposition definiert ist, wobei im Anschluss eine definierte Bewegung, insbesondere Drehung, Schwenkung, translatorische Bewegung und/oder Kippung des mechanischen Schlüssels innerhalb der Aufnahme notwendig ist, um den Mechanismus auszulösen.

Weiterhin kann gemäß der Erfindung vorgesehen sein, dass das Rastelement ein monolithisches Bauteil mit dem Deckel bildet, wobei in eingesetzter Position des Deckels das Rastelement durch eine Öffnung der Aufnahme ragt. Das Rastelement mit Kopfbereich und dem Deckel können hierbei materialeinheitlich ausgeführt sein. Ebenfalls ist es denkbar, wenn das Rastelement und der Deckel aus unterschiedlichen Materialien ausgebildet sind. Beispielsweise kann das Rastelement mit dem Deckel ein 2K-Spritzgussteil sein.

Bei einer weiteren möglichen Ausführung der Erfindung kann die Aufnahme mindestens eine Befestigungszone und eine Arbeitszone aufweisen, wobei in vollständig eingeführter Position der mechanische Schlüssel sich in der Befestigungszone zumindest teilweise befindet und zuverlässig innerhalb des Gehäuses gehalten ist. In der Arbeitsposition befindet sich der mechanische Schlüssel in der Arbeitszone der Aufnahme. Die Befestigungszone bewirkt, dass der mechanische Schlüssel in seiner eingeführten Position zuverlässig innerhalb der Aufnahme des Gehäuses gehalten ist. Damit der Mechanismus zuverlässig durch den mechanischen Schlüssel betätigt werden kann, befindet sich das Rastelement in der Arbeitszone der Aufnahme. Hierbei bietet die Arbeitszone der Aufnahme dem mechanischen Schlüssel genügend Raum und/oder Platz, um über eine definierte Bewegung des mechanischen Schlüssels in der Arbeitszone das Rastelement zu betätigen, um das Loslösen des Deckels vom Gehäuse entstehen zu lassen.

Vorteilhafterweise kann die Arbeitszone ein Lager aufweisen, auf dem der Kopfbereich des Rastelementes aufliegt. Das Lager kann zum Beispiel als Fläche ausgeführt sein, auf der das Rastelement in der eingesetzten Position des Deckels aufliegt. Wenn nun über die definierte Bewegung des mechanischen Schlüssels das Rastelement durch die Öffnung der Aufnahme gedrückt wird, verlässt gleichzeitig das Rastelement den Kontakt zum Lager, sodass sich der Deckel vom Gehäuse loslösen kann.

In einer weiteren die Erfindung verbessernden Ausführungsform kann der Kopfbereich einen Vorsprung aufweisen, der bei einer Bewegung des mechanischen Schlüssels in der Arbeitszone kontaktiert wird, so dass der Kopfbereich aus der Aufnahme bewegt wird. Vorteilhafterweise dient lediglich der Vorsprung als wesentliches Kontaktelement zum mechanischen Schlüssel, um das Rastelement von der Aufnahme zu lösen. Der Vorsprung ragt vorteilhafterweise in die Aufnahme hinein, wobei in der eingeführten Position des mechanischen Schlüssels ein Abstand zwischen dem Vorsprung und dem mechanischen Schlüssel besteht. Lediglich in der Arbeitsposition des mechanischen Schlüssels ist über eine definierte Bewegung des mechanischen Schlüssels eine Kontaktierung des Vorsprunges möglich, sodass wirkungsvoll der Deckel vom Gehäuse gelöst werden kann.

Um ein zuverlässiges Loslösen des Deckels vom Gehäuse zu erreichen, kann vorgesehen sein, dass am Lager eine Nut angeordnet ist, die dem Vorsprung zugeordnet ist, wobei in der eingesetzten Position des Deckels der Vorsprung frei und/oder kontaktlos zu der Nut sich befindet und bei einer Aktivierung des Mechanismus der Vorsprung durch die Nut sich bewegt. Die Nut dient als Führungsmittel, um beim Loslösen des Deckels vom Gehäuse gleichzeitig das Rastelement mit seinem Vorsprung von der Aufnahme zu entfernen. Vorteilhafterweise ist die geometrische Ausgestaltung der Nut der Geometrie des Vorsprunges angepasst, sodass zuverlässig der Vorsprung sich durch die Nut bewegen kann, und zwar dann, wenn der Deckel sich vom Gehäuse loslöst.

Ebenfalls kann vorgesehen sein, dass der Energiespeicher am Deckel befestigt ist, wobei insbesondere über Kontaktmittel an der Elektronik eine Verbindung zum Energiespeicher besteht, wenn der Deckel sich in seiner eingesetzten Position befindet. Das bedeutet, dass die eigentliche Befestigung des Energiespeichers am Deckel erfolgt. Wenn der Deckel sich in eingesetztem Zustand am Gehäuse befindet, ragt zumindest teilweise der am Deckel befestigte Energiespeicher in das Aufnahmefach des Gehäuses, wo die Kontaktierung mit der Elektronik vorliegt. Alternativ ist denkbar, dass die Befestigung des Energiespeichers innerhalb des Aufnahmefaches des Gehäuses vorliegt, wobei der Deckel energiespeicherlos ausgeführt ist und lediglich zur Abdichtung des Innenbereiches des Gehäuses dient.

Vorteilhafterweise kann der Deckel einen Steg aufweisen, der eine Dichtung aufweist, wodurch der Innenbereich des Gehäuses abgedichtet wird. Alternativ und/oder zusätzlich ist es ebenfalls denkbar, dass das Gehäuse an der Öffnung der Aufnahme und/oder, dass das Gehäuse an der Einschuböffnung der Aufnahme, durch die der mechanische Schlüssel geführt wird, eine Dichtung aufweist. Diese genannten Dichtungen können ebenfalls die gleiche mechanische Aufgabe aufweisen, wie die zuvor beschriebene Dichtung, die ein automatisches Lösen des Deckels bewirkt, falls der Mechanismus betätigt worden ist. Vorteilhafterweise bildet der Deckel und der Steg ein monolithisches Bauteil. Der Steg mit der Dichtung dichtet den Innenbereich des Gehäuses zuverlässig ab. Alternativ und/oder zusätzlich kann an der Einschuböffnung der Aufnahme die Dichtung angeordnet sein, damit von außen keine Umwelteinflüsse, wie Wasser, Schmutz etc. in die Aufnahme sowie in den Innenbereich des Gehäuses gelangen. Im Bereich der Öffnung der Aufnahme, in der der Kopfbereich des Rastelementes hindurchragt, ist ebenfalls eine Anordnung der Dichtung denkbar. Auch hier wird wirkungsvoll erzielt, dass aus dem Bereich der Aufnahme keine Umwelteinflüsse in den Innenbereich des Gehäuses gelangen können.

Zudem wird die oben genannte Aufgabe durch ein Verfahren gemäß des Anspruches 13 gelöst. In den abhängigen Verfahrensansprüchen sind bevorzugte Weiterbildungen ausgeführt.

Erfindungsgemäß ist ein Verfahren zum Loslösen eines Deckels eines elektronischen Schlüssels vorgesehen, wobei der elektrische Schlüssel ein Gehäuse aufweist, innerhalb dessen eine Elektronik angeordnet ist. Zudem ist innerhalb des Gehäuses ein Aufnahmefach vorgesehen, in dem ein Energiespeicher zur elektrischen Energieversorgung der Elektronik eingesetzt ist. Der Deckel ist am Gehäuse lösbar befestigt und verschließt das Aufnahmefach in einer eingesetzten Position des Deckels abdichtend. Zudem ist das Gehäuse mit einer Aufnahme ausgebildet, in der ein mechanischer Schlüssel aufgenommen ist. In komplett herausgezogener Position des mechanischen Schlüssels ist das Sicherheitssystem mechanisch zu betätigen. Der mechanische Schlüssel kann somit als Notschlüssel zum Einsatz kommen. Die wesentlichen Schritte zum Loslösen des Deckels sind nun, dass eine erste Bewegung des mechanischen Schlüssels innerhalb der Aufnahme aus einer eingeführten Position in eine Arbeitsposition ausgeführt wird, wobei in der Arbeitsposition der mechanische Schlüssel teilweise aus der Aufnahme heraus ragt. Anschließend ist innerhalb der Arbeitsposition des mechanischen Schlüssels eine zweite Bewegung notwendig, bei der ein innerhalb der Aufnahme angeordneter Mechanismus betätigt wird, sodass innenseitig des Gehäuses die Befestigung des Deckels gelöst wird. Hierdurch wird ein sicheres und gut wiederholbares Loslöseverfahren bezüglich des Deckels gewährleistet, welches innenseitig des Gehäuses aktiviert wird. Der mechanische Schlüssel, der in der komplett herausgezogenen Position zur mechanischen Betätigung des Sicherheitssystems dient, kann als Hilfsmittel und/oder Werkzeug verwendet werden, um den erfindungsgemäßen Mechanismus innenseitig des Gehäuses zu aktivieren.

Die erste Bewegung ist translatorisch und die zweite Bewegung ist eine Bewegung, die sich von der ersten Bewegung unterscheidet, die zweite Bewegung ist dabei eine Drehbewegung und/oder eine Schwenkbewegung und/oder eine Kippbewegung und/oder eine translatorische Bewegung. Das bedeutet, dass die zweite Bewegung auch eine Kombination aus zumindest einer Drehbewegung und/oder einer Schwenkbewegung und/oder einer Kippbewegung und/ oder eine translatorische Bewegung sein kann.

Weitere Vorteile, Merkmale und Einzelheiten der Erfindung ergeben sich aus der nachfolgenden Beschreibung, in der unter Bezugnahme auf die Zeichnungen mögliche Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine rein schematische Ansicht eines Kraftfahrzeuges mit einem Sicherheitssystem, das in Kommunikation mit einem elektronischen Schlüssel bringbar ist,
- Fig. 2: eine mögliche Ausführungsform des in Figur 1 gezeigten elektronischen Schlüssels,
- Fig. 3: der elektronische Schlüssel gemäß Figur 2 in einer weiteren Darstellung und
- Fig. 4: ein weiteres Ausführungsbeispiel eines elektronischen Schlüssels gemäß Figur 1.

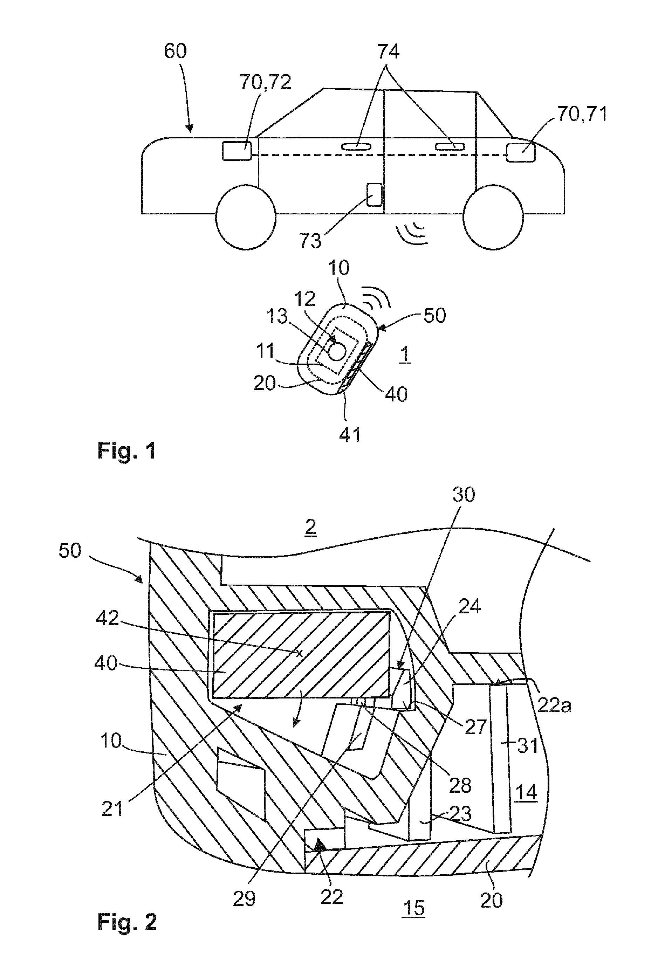

In Figur 1 ist ein Kraftfahrzeug 60 gezeigt, das ein Sicherheitssystem 70 aufweist. Das Sicherheitssystem 70 gemäß dem dargestellten Ausführungsbeispiel umfasst ein Zugangskontrollsystem 71 sowie ein Fahrberechtigungskontrollsystem 72. Das Zugangskontrollsystem 71 ist in Wirkverbindung mit zumindest einem Schloss 73 der Fahrzeugtür und/oder der Heckklappe des Kraftfahrzeuges 60. Der elektronische Schlüssel 50 kann Bestandteil eines "Keyless-Entry", "Keyless-Go" und/oder eines "Passiv-Keyless-Entry"- Sicherheitssystems 70 des Kraftfahrzeuges 60 sein.

Damit der Benutzer, der den elektronischen Schlüssel 50, der auch als ID-Geber genannt werden kann, bei sich trägt, in das verschlossene Kraftfahrzeug 60 sich begeben kann, erfolgt zunächst ein Authentifizierungsvorgang zwischen dem elektronischen Schlüssel 50 und dem Kraftfahrzeug 60, insbesondere dem Sicherheitssystem 70. Falls der Benutzer die berechtigte Person ist, aktiviert das Zugangskontrollsystem 71 einen Entriegelungsvorgang der Fahrzeugtür bzw. der Heckklappe. Das Schloss 73 wird im folgenden Ausführungsbeispiel entriegelt, sodass der Benutzer über eine Betätigung am Griff 74 die Tür öffnen kann. Im folgenden Ausführungsbeispiel erfolgt eine weitere Authentifizierung zwischen dem elektronischen Schlüssel 50 und dem Kraftfahrzeug 60, wenn der Benutzer sich im Kraftfahrzeug 60 befindet und den Motor starten möchte. Das Fahrberechtigungskontrollsystem 72 führt hierbei die Überprüfung durch, inwieweit der Benutzer berechtigt ist, dass Kraftfahrzeug 60, insbesondere den Motor zu starten. Falls eine positive Authentifizierung vorliegt, wird in der Regel die Lenkradverriegelung aufgehoben, sodass der Benutzer nach dem Motorstart auch das Kraftfahrzeug 60 tatsächlich manövrieren kann.

Wie in Figur 1 deutlich zu erkennen ist, weist der elektronische Schlüssel 50 einen mechanischen Schlüssel 40 auf, der sich innerhalb des Gehäuses 10 des elektronischen Schlüssels 50 befindet. Das Gehäuse 10 ist im dargestellten Ausführungsbeispiel aus einem Kunststoff ausgeführt und weist für den mechanischen Schlüssel 40 eine Aufnahme auf, die in den Figuren 2 bis Figur 4 schematisch gezeigt ist.

Innerhalb des elektronischen Schlüssels 50 befindet sich eine Elektronik 11 sowie eine Batterie 13 und/oder ein Energiespeicher 13, der in einer weiteren Ausführungsform der Erfindung auch wiederaufladbar sein kann. Die Batterie 13 befindet sich in einem Aufnahmefach 12 des Gehäuses 10. Das Aufnahmefach 12 wird durch einen Deckel 20 verschlossen, sodass die sich innerhalb des Gehäuses 10 befindenden Komponenten, insbesondere die Elektronik 11 und die Batterie 13 von den außen vorherrschenden Umwelteinflüssen geschützt sind. Die Befestigung der Batterie 13 kann auf der Unterseite des Deckels 20 realisiert sein, sodass bei einem Abnehmen des Deckels 20 gleichzeitig die Batterie 13 aus dem Aufnahmefach 12 entnommen wird. Alternativ kann die Batterie 13 direkt im Aufnahmefach 12 befestigt sein, sodass bei einem Loslösen des Deckels 20 zunächst die Batterie innerhalb des Gehäuses 10 verbleibt.

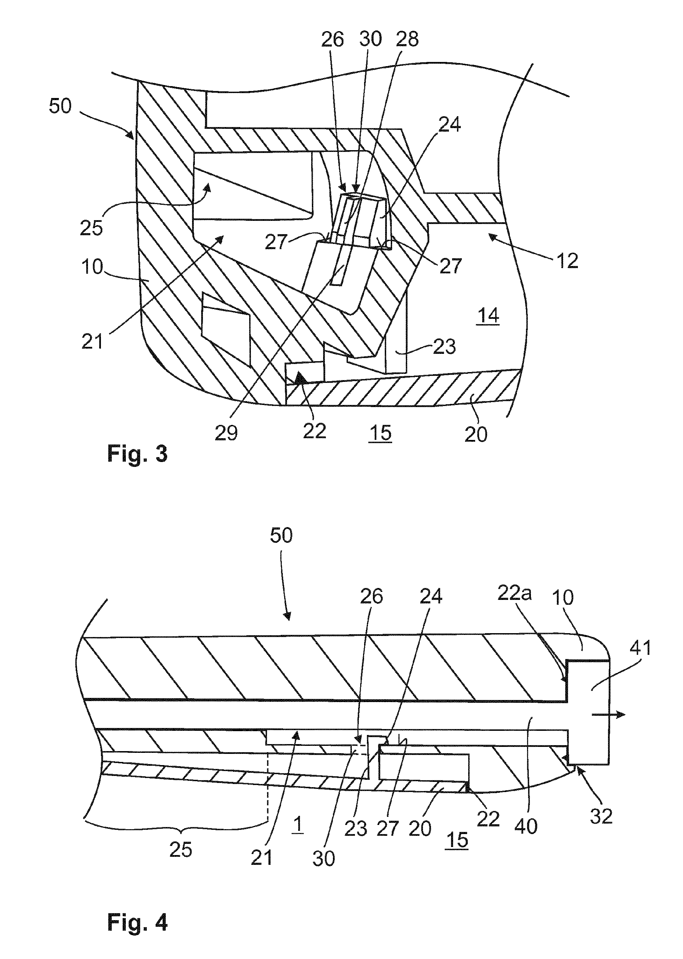

Um den Deckel 20 auf komfortable und sichere Art vom Gehäuse 10 zu lösen, ist ein spezieller Mechanismus innenseitig des Gehäuses 10 vorgesehen. Die Figuren 2 bis Figur 4 zeigen mögliche Ausführungsbeispiele des Mechanismus. Die Besonderheit des Mechanismus ist, dass über eine Bewegung des mechanischen Schlüssels 40 der Mechanismus zum Loslösen des Deckels 20 vom Gehäuse 10 betätigbar ist. Gemäß der dargestellten Ausführungsbeispiele weist der Mechanismus ein Rastelement 23 auf, welches einen Kopfbereich 24 hat, der in der eingesetzten Position des Deckels 20, die in den Figuren 2 und Figur 4 gezeigt ist, in der Aufnahme 21 befestigt ist. Das bedeutet, dass der Kopfbereich 24 eine Rastverbindung an der Aufnahme 21 einnimmt.

Zudem ist eine Dichtung 22 am Gehäuse 10 angeordnet, die wirkungsvoll verhindert, dass Umwelteinflüsse, wie Staub, Feuchtigkeit, etc. das Innenleben des Gehäuses 10 schädlich beeinflussen. Ferner übt die Dichtung 22 in der eingesetzten Position des Deckels 20 eine derartige Kraft am Gehäuse 10 aus, dass nach Aktivierung des Mechanismus, worauf im Folgenden noch eingegangen wird, der Deckel 20 zumindest teilweise vom Gehäuse 10 "selbstständig" sich löst, insbesondere vom Gehäuse 10 herausspringt.

Gemäß der Figuren 1 und Figur 4 befindet sich der mechanische Schlüssel 40 in seiner eingeführten Position 1. Das Gehäuse 10 mit der Aufnahme 21 ist derart ausgeführt, dass der mechanische Schlüssel 40, auch in den Ausführungsbeispielen gemäß Figur 2 und Figur 3, zwischen seiner eingeführten Position 1 und einer Arbeitsposition 2 bewegt werden kann. Die Arbeitsposition 2 ist exemplarisch in Figur 2 gezeigt. Die Arbeitsposition 2 wird dadurch erreicht, dass der Benutzer zumindest teilweise den mechanischen Schlüssel 40 aus der Aufnahme 21 herauszieht, sodass der mechanische Schlüssel 40 bereichsweise aus dem Gehäuse 10 herausragt. Diese Arbeitsposition 2 ist notwendig, um den Mechanismus zum Lösen des Deckels 20 zu aktivieren. Um den Deckel 20 vom Gehäuse 10 zu lösen, wird über eine definierte Bewegung des mechanischen Schlüssel 40 das Rastelement 23 zielgerichtet derart bewegt, dass die Rastverbindung zwischen dem Rastelement 23 und der Aufnahme 21 bzw. dem Gehäuse 10 gelöst wird. Besteht keine Verbindung mehr zwischen dem Rastelement 23 und der Aufnahme 21, sorgt die Dichtung 22 dafür, dass zumindest teilweise der Deckel 20 vom Gehäuse 10 zumindest bereichsweise herausspringt. Der Benutzer muss anschließend lediglich am Deckel 20 angreifen bzw. ziehen, um vollständig den Deckel 20 vom Gehäuse 10 zu lösen.

Damit der mechanische Schlüssel 40 zuverlässig in die Arbeitsposition 2 gebracht werden kann, ist es gemäß Figur 2 sowie dem Ausführungsbeispiel gemäß Figur 4 von Vorteil, wenn der Kopfbereich 24 beabstandet zum mechanischen Schlüssel 40 ist.

Gemäß Figur 2 und Figur 3 ist eine erste Bewegung des mechanischen Schlüssels 40 notwendig, um den mechanischen Schlüssel 40 aus der eingeführten Position 1 in die Arbeitsposition 2 zu überführen. Im folgenden Schritt ist eine zweite Bewegung des mechanischen Schlüssels 40 notwendig, wenn die Arbeitsposition 2 erreicht ist, um den Mechanismus zu aktivieren. Im vorliegenden Ausführungsbeispiel gemäß Figur 2 ist die zweite Bewegung des mechanischen Schlüssels 40 durch eine Drehbewegung um den Uhrzeigersinn um die Achse 42, siehe Pfeildarstellung, definiert. Wie Figur 2 bis Figur 4 deutlich zeigen, weist die Aufnahme 21 eine Befestigungszone 25 und eine Arbeitszone 26 auf. In der vollständig eingeführten Position 1 des Schlüssels 40 befindet sich der Schlüssel 40 in der Befestigungszone 25. In dieser Lage des mechanischen Schlüssels 40 kann der mechanische Schlüssel 40 lediglich in eine Richtung, und zwar in Richtung Arbeitsposition 2 bewegt werden. Die Befestigungszone 25 ist somit derart ausgeführt, dass jegliche Schwenk- und/oder Kippbewegungen des mechanischen Schlüssels 40 ausgeschlossen sind. Erst wenn die Arbeitsposition 2 des mechanischen Schlüssels 40 erreicht ist, kann die zweite Bewegung des mechanischen Schlüssels 40 in der Arbeitszone 26 der Aufnahme 21 erfolgen. Der Kopfbereich 24 des Rastelementes 23 liegt gemäß der Ausführungsbeispiele aus Figur 2 bis Figur 4 auf einem Lager 27 der Aufnahme 21. Das Lager 27 befindet sich hierbei innenseitig der Aufnahme 21. Zudem ragt das Rastelement 23 durch eine Öffnung 30 der Aufnahme 21. Gemäß Figur 2 und Figur 3 weist der Kopfbereich 24 einen Vorsprung 28 auf, der im dargestellten Ausführungsbeispiel mittig am Kopfbereich 24 positioniert ist. Über eine bereits beschriebene Drehbewegung des mechanischen Schlüssels 40 innerhalb der Arbeitszone 26 der Aufnahme 21 wird eine entsprechende Kraft auf den Vorsprung 28 ausgeübt, sodass der Kopfbereich 24 sich aus der Aufnahme 21 wegbewegt bzw. durch die Öffnung 30 in den Innenbereich 14 des Gehäuses 10 gedrückt wird.

Wenn nun der Kopfbereich 24 den Kontakt mit dem Lager 27 verliert, sorgt die Dichtung 22 dafür, dass der Deckel 22 zumindest teilweise aus dem Gehäuse 10 herausspringt. Dieses gilt ebenfalls für das Ausführungsbeispiel gemäß Figur 4. In dem Ausführungsbeispiel gemäß Figur 4 ist es notwendig, zunächst in einem ersten Bewegungsschritt den mechanischen Schlüssel 40 derart weit aus der Aufnahme 21 des Gehäuses 10 herauszuziehen, bis das nicht explizit dargestellte freie Ende des mechanischen Schlüssels 40, welches auf der gegenüberliegenden Seite zum Griff 41 des Schlüssels 40 liegt, rechtsseitig zum Kopfbereich 24 des Rastelementes 23 liegt. Somit ist die Arbeitsposition 2 des mechanischen Schlüssels 40 erreicht. In einer zweiten Bewegung des mechanischen Schlüssels 40 wird dieser in etwa gegen den Uhrzeigersinn ein wenig gekippt, wobei gleichzeitig eine translatorische Bewegung in Richtung Kopfbereich 24 erfolgt, sodass wirkungsvoll die Rastverbindung des Rastelementes 23 vom Gehäuse 10 gelöst werden kann. Das Rastelement 23 verformt sich hierbei elastisch nach links, wobei der Kontakt des Kopfbereiches 24 mit dem Lager 27 verloren geht, sodass über das automatische Lösen des Deckels 20 aus dem Gehäuse 10 - ausgelöst durch die Dichtung 22 - der Kopfbereich 24 durch die Öffnung 30 in den Außenbereich 15 sich bewegt.

Gemäß der Ausführungsbeispiele aus Figur 2 bis Figur 4 bildet das Rastelement 23 mit dem Deckel 20 ein monolithisches Bauteil. Zudem weist die Arbeitszone 26 eine definierte Kammer auf, in der das Rastelement 23 durch die Öffnung 30 der Aufnahme 21 hineinragt. Damit gemäß Figur 2 und Figur 3 der Kopfbereich 24 zuverlässig sich aus der Rastverbindung lösen kann, ist am Lager 27 eine Nut 29 ausgebildet, die dem Vorsprung 28 zugeordnet ist. Der Vorsprung 28 ist hierbei mit einer schrägen Fläche ausgeführt, die zum mechanischen Schlüssel 40 gerichtet ist. Somit wird die Wirkverbindung mit dem mechanischen Schlüssel 40 verbessert, falls eine Aktivierung des Mechanismus gefordert ist. In eingesetzter Position des Deckels 20 befindet sich der Vorsprung 28 frei sowie kontaktlos zu der Nut 29. Bei einer Aktivierung des Mechanismus gleitet der Vorsprung 28 zumindest teilweise durch diese Nut 29, die als eine Art Führungshilfe dient.

Figur 2 zeigt zudem, dass der Deckel 20 innenseitig mit einem Steg 31 ausgeführt sein kann, der sich im Innenbereich 14 des Gehäuses 10 befindet. Am freien Ende befindet sich eine Dichtung 22a, die zuverlässig bewirkt, dass vom Außenberich 15 keine Umwelteinflüsse in den Innenbereich 14 des Gehäuses 10, wo die empfindliche Elektronik 11 sich befindet, gelangt. Der Steg 31 ist im vorliegenden Ausführungsbeispiel materialeinheitlich mit dem Deckel 20 ausgeführt.

Gemäß Figur 4 ist es denkbar, dass im Bereich der Einschuböffnung 32 eine Dichtung 22a angeordnet ist, die ebenfalls verhindert, dass in die Aufnahme 21 bzw. in den Innenbereich 14 des Gehäuses 10 Umwelteinflüsse gelangen können, welches für die Elektronik 11, einschließlich Energiespeicher 13 nicht von Vorteil wäre.

Zurückkommend auf Figur 2 ist es ebenfalls denkbar, dass zusätzlich und/oder alternativ zu der bereits beschriebenen Dichtung 22a im Bereich der Öffnung 30 eine entsprechende Dichtung angeordnet sein kann, die verhindert, dass Umwelteinflüsse aus der Aufnahme 21 in den Innenbereich 14 des Gehäuses 10 gelangen können.

### Bezugszeichenliste

- 1: eingeführte Position
- 2: Arbeitsposition

- 10: Gehäuse
- 11: Elektronik
- 12: Aufnahmefach
- 13: Energiespeicher, Batterie
- 14: Innenbereich
- 15: Außenbereich

- 20: Deckel
- 21: Aufnahme
- 22: Dichtung
- 22a: Dichtung
- 23: Rastelement
- 24: Kopfbereich
- 25: Befestigungszone
- 26: Arbeitszone
- 27: Lager
- 28: Vorsprung
- 29: Nut

- 30: Öffnung der Aufnahme 21
- 31: Steg
- 32: Einschuböffnung

- 40: mechanischer Schlüssel
- 41: Griff
- 42: Achse

- 50: elektronischer Schlüssel, ID-Geber

- 60: Kraftfahrzeug

- 70: Sicherheitssystem
- 71: Zugangskontrollsystem
- 72: Fahrberechtigungskontrollsystem
- 73: Schloss
- 74: Griff

## Patentansprüche

1. Elektronischer Schlüssel (50) für ein Sicherheitssystem (70), das insbesondere ein Zugangskontrollsystem (71) und/oder ein Fahrberechtigungskontrollsystem (72) umfasst, eines Kraftfahrzeuges, mit
einem Gehäuse (10), innerhalb dessen eine Elektronik (11) zur drahtlosen Kommunikation mit dem Sicherheitssystem (70) angeordnet ist,
einem innerhalb des Gehäuses (10) ausgebildeten Aufnahmefach (12), in dem ein Energiespeicher (13) zur elektrischen Energieversorgung der Elektronik (11) sich befindet,
einem Deckel (20), der am Gehäuse (10) lösbar befestigt ist und das Aufnahmefach (12) in einer eingesetzten Position des Deckels (20) abdichtend verschließt, und
einer am Gehäuse (10) ausgebildeten Aufnahme (21), in der ein mechanischer Schlüssel (40) aufgenommen ist,
**wobei**
ein Mechanismus derart innerhalb der Aufnahme (21) angeordnet ist, dass über eine Bewegung des mechanischen Schlüssels (40) innerhalb der Aufnahme (21) der Mechanismus betätigbar ist, wodurch ein Loslösen des Deckels (20) vom Gehäuse (10) erzielbar ist, und wobei eine Dichtung (22) zwischen dem Deckel (20) und dem Gehäuse (10) angeordnet ist, wobei in der eingesetzten Position des Deckels (20) die Dichtung (22) eine derartige Kraft am Gehäuse (10) ausübt, dass nach Aktivierung des Mechanismus sich der Deckel (20) zumindest teilweise vom Gehäuse (10) löst, und wobei dieser vom Gehäuse (10) herausspringt,
**dadurch gekennzeichnet,**
**dass** die Aufnahme (21) derart ausgeführt ist, dass der mechanische Schlüssel (40) innerhalb der Aufnahme (21) zumindest teilweise drehbar und/oder schwenkbar und/oder kippbar ist.

2. Elektronischer Schlüssel (50) nach Anspruch 1,
**dadurch gekennzeichnet,**
**dass** der Mechanismus ein federndes Rastelement (23) aufweist, das einen Kopfbereich (24) aufweist, der in der eingesetzten Position des Deckels (20) in der Aufnahme (21) befestigt ist und/oder dass der Kopfbereich (24) beabstandet zum in der eingeführten Position (1) sich befindenden mechanischen Schlüssel (40) ist.

3. Elektronischer Schlüssel (50) nach einem der vorgenannten Ansprüche,
**dadurch gekennzeichnet,**
**dass** der mechanische Schlüssel (40) zwischen einer eingeführten Position (1) und einer Arbeitsposition (2) innerhalb der Aufnahme (21) bewegbar ist, wobei in der Arbeitsposition (2) der mechanische Schlüssel (40) teilweise aus der Aufnahme (21) herausragt, wobei in der Arbeitsposition (2) der Mechanismus zum Lösen des Deckels (20) aktivierbar ist.

4. Elektronischer Schlüssel (50) nach einem der vorgenannten Ansprüche,
**dadurch gekennzeichnet,**
**dass** die Aufnahme (21) als Kanal oder als Kammer ausgebildet ist, wobei der mechanische Schlüssel (40) entlang der Längserstreckung der Aufnahme (21) linear bewegbar ist und die Aufnahme (21) derart ausgeführt ist, dass der mechanische Schlüssel (40) in einer definierten, innerhalb der Aufnahme (21) eingeführten Position (1) eine Aktivierung des Mechanismus bewirkt.

5. Elektronischer Schlüssel (50) nach einem der vorgenannten Ansprüche,
**dadurch gekennzeichnet,**
**dass** das Rastelement (23) ein monolithisches Bauteil mit dem Deckel (20) bildet, wobei in eingesetzter Position des Deckels (20) das Rastelement (23) durch eine Öffnung (30) der Aufnahme (21) ragt.

6. Elektronischer Schlüssel (50) nach einem der vorgenannten Ansprüche,
**dadurch gekennzeichnet,**
**dass** die Aufnahme (21) mindestens eine Befestigungszone (25) und eine Arbeitszone (26) aufweist, wobei in vollständig eingeführter Position (1) des mechanischen Schlüssels (40) der mechanische Schlüssel (40) sich in der Befestigungszone (25) zumindest teilweise befindet und zuverlässig innerhalb des Gehäuses (10) gehalten ist, und der mechanische Schlüssel (40) in seiner Arbeitsposition (2) sich in der Arbeitszone (26) der Aufnahme (21) befindet, wobei insbesondere die Arbeitszone (26) ein Lager (27) aufweist, auf dem der Kopfbereich (24) des Rastelementes (23) aufliegt.

7. Elektronischer Schlüssel (50) nach einem der vorgenannten Ansprüche,
**dadurch gekennzeichnet,**
**dass** in der Befestigungszone (25) der mechanische Schlüssel (40), linear innerhalb der Aufnahme (21) bewegbar ist, wobei die Aufnahme (21) derart ausgeführt ist, dass in der Arbeitsposition (2) der mechanische Schlüssel (40) drehbar und/oder schwenkbar und/oder kippbar ist, wodurch eine Aktivierung des Mechanismus zum Lösen des Deckels (20) durchführbar ist.

8. Elektronischer Schlüssel (50) nach einem der vorgenannten Ansprüche,
**dadurch gekennzeichnet,**
**dass** der Kopfbereich (24) einen Vorsprung (28) aufweist, der bei einer Bewegung des mechanischen Schlüssels (40) in der Arbeitszone (26) kontaktiert wird, so dass der Kopfbereich (24) aus der Aufnahme (21) bewegt wird.

9. Elektronischer Schlüssel (50) nach Anspruch 6 oder 8,
**dadurch gekennzeichnet,**
**dass** am Lager (27) eine Nut (29) angeordnet ist, die dem Vorsprung (28) zugeordnet ist, wobei in der eingesetzten Position des Deckels (20) der Vorsprung (28) frei und/oder kontaktlos zu der Nut (29) sich befindet und bei einer Aktivierung des Mechanismus der Vorsprung (28) durch die Nut (29) sich bewegt.

10. Elektronischer Schlüssel (50) nach einem der vorgenannten Ansprüche,
**dadurch gekennzeichnet,**
**dass** der Energiespeicher (13) am Deckel (20) befestigt ist, wobei insbesondere über Kontaktmittel an der Elektronik (11) eine Verbindung zum Energiespeicher (13) besteht und/oder dass der Deckel (20) einen Steg (31) aufweist, der eine Dichtung (22a) aufweist, wodurch der Innenbereich (14) des Gehäuses (10) abgedichtet wird.

11. Elektronischer Schlüssel (50) nach einem der vorgenannten Ansprüche,
**dadurch gekennzeichnet,**
**dass** das Gehäuse (10) an der Öffnung (30) der Aufnahme (21) und/oder, dass das Gehäuse (10) an der Einschuböffnung (32) der Aufnahme (21), durch die der mechanische Schlüssel (40) geführt wird, eine Dichtung (22a) aufweist.

12. Verfahren zum Loslösen eines Deckels (20) eines elektronischen Schlüssel (50), der zur Kommunikation mit einem Sicherheitssystem (70) eines Kraftfahrzeuges (60), insbesondere mit einem Zugangskontrollsystem (71) und/oder mit einem Fahrberechtigungskontrollsystem (72) dient, wobei
der elektronische Schlüssel (50) ein Gehäuse (10) aufweist, innerhalb dessen eine Elektronik (11) angeordnet ist,
ein innerhalb des Gehäuses (10) ausgebildetes Aufnahmefach (12) vorgesehen ist, in dem ein Energiespeicher (13) zur elektrischen Energieversorgung der Elektronik (11) sich befindet,
der Deckel (20) am Gehäuse (10) lösbar befestigt ist und das Aufnahmefach (12) in einer eingesetzten Position des Deckels (20) abdichtend verschließt,
das Gehäuse (10) mit einer Aufnahme (21) ausgebildet ist, in der ein mechanischer Schlüssel (40) aufgenommen ist,
**umfassend folgende Schritte:**
eine erste Bewegung des mechanischen Schlüssels (40) innerhalb der Aufnahme (21) aus einer eingeführten Position (1) in eine Arbeitsposition (2), bei der der mechanische Schlüssel (40) teilweise aus der Aufnahme (21) herausragt,
eine zweite Bewegung des mechanischen Schlüssels (40) innerhalb seiner Arbeitsposition (2), bei der ein innerhalb der Aufnahme (21) angeordneter Mechanismus betätigt wird, so dass innenseitig des Gehäuses (10) die Befestigung des Deckels (20) gelöst wird, wobei eine Dichtung (22) zwischen dem Deckel (20) und dem Gehäuse (10) angeordnet ist, wobei in der eingesetzten Position des Deckels (20) die Dichtung (22) eine derartige Kraft am Gehäuse (10) ausübt, das nach Aktivierung des Mechanismus sich der Deckel (20) zumindest teilweise vom Gehäuse (10) löst, wobei dieser vom Gehäuse (10) herausspringt,
**dadurch gekennzeichnet,**
**dass** der Schlüssel in seiner zweiten Bewegung gedreht und/oder geschwenkt und/oder gekippt wird.

13. Verfahren nach Anspruch 12,
**dadurch gekennzeichnet,**
**dass** die erste Bewegung translatorisch ist, die sich von der zweiten Bewegung unterscheidet.

14. Verfahren nach Anspruch 12 oder 13,
**dadurch gekennzeichnet,**
**dass** ein Deckel (20) eines elektronischen Schlüssels (50) gemäß einem der Ansprüche 1 bis 11 gelöst wird.

## Claims

1. An electronic key (50) for a security system (70) comprising in particular an access control system (71) and/or a drive authorisation control system (72) of a motor vehicle, with
a housing (10), inside which an electronics unit (11) is located for wireless communication with the security system (70),
a compartment (12) conformed inside the housing (10), in which an energy storage device (13) is located for supplying electrical power to the electronics unit (11),
a cover (20) that is detachably fastened on the housing (10) and sealingly closes the compartment (12) when the cover (20) is in an inserted position, and
a seating (21) conformed on the housing (10), in which a mechanical key (40) is accommodated,
wherein
a mechanism is arranged in the seating (21) in such manner that the mechanism can be operated via a movement of the mechanical key (40) inside the seating (21), whereby a release of the cover (20) from the housing (10) can be obtained, and wherein a seal (22) is arranged between the cover (20) and the housing (10), wherein the seal (22) exerts such a force on the housing (10) with the cover (20) in the inserted position that after the mechanism is activated the cover (20) is at least partially detached from the housing (10), and wherein said cover pops out of the housing (10)
**characterised in**
**that** the seating (21) is formed in such a way that the mechanical key (40) is at least partially able to be rotated and/or pivoted and/or tilted inside the seating (21).

2. The electronic key (50) according to claim 1,
**characterised in**
**that** the mechanism comprises a resilient detent element (23) having a head section (24) that is secured in the seating (21) when the cover (20) is in the inserted position, and/or that the head section (24) positioned at a distance from the mechanical key (40) when said key is in the inserted position (1).

3. The electronic key (50) according to any one of the preceding claims,
**characterised in**
**that** the mechanical key (40) is movable within the seating (21) between an inserted position (1) and a working position (2), wherein in the working position (2) the mechanical key (40) partially projects out of the seating (21) wherein in the working position (2) the mechanism can be activated in order to release the cover (20).

4. The electronic key (50) according to any one of the preceding claims,
**characterised in**
**that** the seating (21) is formed as a channel or a chamber, wherein the mechanical key (40) is movable linearly along the lengthwise extension of the seating (21) and the seating (21) is formed such that when in a defined, inserted position (1) within the seating (21) the mechanical key (40) causes activation of the mechanism.

5. The electronic key (50) according to any one of the preceding claims,
**characterised in that**
the detent element (23) forms a monolithic component with the cover (20), wherein when the cover (20) is in the inserted position the detent element (23) protrudes through an opening (30) in the seating (21).

6. The electronic key (50) according to any one of the preceding claims,
**characterised in**
**that** the seating (21) has at least one fastening zone (25) and one working zone (26), wherein when the mechanical key (40) is in the fully inserted position (1), the mechanical key (40) is at least partially located in the fastening zone (25) and is retained securely inside the housing (10), and when in its working position (2), the mechanical key (40) is located in the working zone (26) of the seating (21), wherein in particular the working zone (26) has a bearing (27) on which the head section (24) of the detent element (23) rests.

7. The electronic key (50) according to any one of the preceding claims,
**characterised in that**
the mechanical key (40) is movable linearly in the fastening zone (25) within the seating (21), wherein the seating (21) is foremd such that in the working position (2) the mechanical key (40) is rotatable and/or pivotable and/or tiltable, whereby the mechanism can be activated to effect the release of the cover (20).

8. The electronic key (50) according to any one of the preceding claims,
**characterised in**
**that** the head section (24) has a projection (28) that is contacted in the event of a movement of the mechanical key (40) in the working zone (26), so that the head section (24) is moved out of the seating (21).

9. The electronic key (50) according to either of claims 6 or 8,
**characterised in**
**that** a groove (29) is provided on the bearing (27) and is assigned to the projection (28), wherein when the cover (20) is in the inserted position the projection (28) is free and/or without contact with the groove (29), and when the mechanism is activated the projection (28) moves through the groove (29).

10. The electronic key (50) according to any one of the preceding claims,
**characterised in**
**that** the energy storage device (13) is attached to the cover (20), wherein in particular a connection exists with the energy storage device (13) via contact means on the electronics unit (11), and/or that the cover (20) has a bar (31) that has a seal (22a), by which means the inner area (14) of the housing (10) is sealed.

11. The electronic key (50) according to any one of the preceding claims,
**characterised in that**
the housing (10) has a seal (22a) at the opening (30) of the seating (21) and/or that the housing (10) has a seal at the insertion opening (32) of the seating (21) through which the mechanical key (40) is guided.

12. A method for detaching a cover (20) of an electronic key (50) that serves for communication with a security system (70) of a motor vehicle (60), in particular with an access control system (71) and/or with a driving authorisation control system (72), wherein
the electronic key (50) comprises a housing (10), within which an electronics unit (11) is located,
a compartment (12) conformed inside the housing (10) is provided, in which an energy storage device (13) is located for supplying electrical power to the electronics unit (11),
the cover (20) is detachably fastened to the housing (10) and sealingly closes the compartment (12) when the cover (20) is in an inserted position,
the housing (10) is formed with a seating (21), in which a mechanical key (40) is accommodated,
comprising the following steps:
a first movement of the mechanical key (40) inside the seating (21) from an inserted position (1) to a working position (2), in which the mechanical key (40) partially protrudes out of the seating (21),
a second movement of the mechanical key (40) in the working position (2) thereof, in which a mechanism arranged inside the seating (21) is operated so that the fastening of the cover (20) is released inside the housing (10), wherein a seal (22) is arranged between the cover (20) and the housing (10), wherein when the cover (20) is in the inserted position the seal (22) exerts such a force on the housing (10) that after the mechanism is activated the cover (20) is at least partly detached from the housing (10), wherein said cover pops out of the housing (10),
**characterised in**
**that** the key is rotated and/or pivoted and/or tilted in the second movement thereof.

13. The method according to claim 12,
**characterised in**
**that** the first movement is a translational movement and differs from the second movement.

14. The method according to either of claims 12 or 13,
**characterised in**
**that** a cover (20) of an electronic key (50) according to any one of claims 1 to 11 is released.

## Revendications

1. Clé électronique (50) pour un système de sécurité (70), qui comprend en particulier un système de contrôle d'accès (71) et/ou un système de contrôle d'autorisation de conduite (72), d'un véhicule automobile, avec un boîtier (10) à l'intérieur duquel est disposée une électronique (11) pour la communication sans fil avec le système de sécurité (70),
un compartiment de réception (12) formé à l'intérieur du boîtier (10), dans lequel se trouve un réservoir d'énergie (13) pour l'alimentation en énergie électrique de l'électronique (11),
un couvercle (20) qui est fixé de manière détachable au boîtier (10) et qui ferme de manière étanche le compartiment de réception (12) dans une position insérée du couvercle (20), et
un logement (21) formé sur le boîtier (10), dans lequel est logée une clé mécanique (40),
un mécanisme étant disposé à l'intérieur du logement (21) de telle façon qu'un mouvement de la clé mécanique (40) à l'intérieur du logement (21) permette d'actionner le mécanisme et d'obtenir ainsi un détachement du couvercle (20) du boîtier (10), et un joint (22) étant disposé entre le couvercle (20) et le boîtier (10), lequel joint (22) exerce dans la position insérée du couvercle (20) une force telle sur le boîtier (10) qu'après activation du mécanisme, le couvercle (20) se détache au moins partiellement du boîtier (10) et est éjecté du boîtier (10),
**caractérisée en ce**
**que** le logement (21) est réalisé de telle façon que la clé mécanique (40) puisse au moins partiellement tourner et/ou pivoter et/ou basculer à l'intérieur du logement (21).

2. Clé électronique (50) selon la revendication 1,
**caractérisée en ce**
**que** le mécanisme présente un élément d'encliquetage élastique (23) qui présente une partie tête (24) qui est fixée dans le logement (21) dans la position insérée du couvercle (20) et/ou que la partie tête (24) est éloignée de la clé mécanique (40) se trouvant dans la position introduite (1).

3. Clé électronique (50) selon l'une des revendications précédentes,
**caractérisée en ce**
**que** la clé mécanique (40) est mobile entre une position introduite (1) et une position de travail (2) à l'intérieur du logement (21), la clé mécanique (40) dépassant partiellement du logement (21) dans la position de travail (2) et le mécanisme servant à détacher le couvercle (20) étant activable dans la position de travail (2).

4. Clé électronique (50) selon l'une des revendications précédentes,
**caractérisée en ce**
**que** le logement (21) est réalisé sous la forme d'un canal ou d'une chambre, la clé mécanique (40) étant mobile linéairement le long de l'extension longitudinale du logement (21) et le logement (21) étant réalisé de telle façon que la clé mécanique (40) provoque une activation du mécanisme dans une position (1) définie, introduite à l'intérieur du logement (21).

5. Clé électronique (50) selon l'une des revendications précédentes,
**caractérisée en ce**
**que** l'élément d'encliquetage (23) forme un composant monolithique avec le couvercle (20), l'élément d'encliquetage (23) faisant saillie à travers une ouverture (30) du logement (21) dans la position insérée du couvercle (20).

6. Clé électronique (50) selon l'une des revendications précédentes,
**caractérisée en ce**
**que** le logement (21) présente au moins une zone de fixation (25) et une zone de travail (26), la clé mécanique (40) dans la position complètement insérée (1) se trouvant au moins partiellement dans la zone de fixation (25) et étant retenue de façon fiable à l'intérieur du boîtier (10) et la clé mécanique (40) dans sa position de travail (2) se trouvant dans la zone de travail (26) du logement (21), la zone de travail (26) présentant en particulier un palier (27) sur lequel porte la partie tête (24) de l'élément d'encliquetage (23).

7. Clé électronique (50) selon l'une des revendications précédentes,
**caractérisée en ce**
**que** la clé mécanique (40) est mobile linéairement à l'intérieur du logement (21) dans la zone de fixation (25), le logement (21) étant réalisé de telle façon que dans la position de travail (2), la clé mécanique (40) puisse tourner et/ou pivoter et/ou basculer au moyen duquel une activation du mécanisme servant à détacher le couvercle (20) est réalisable.

8. Clé électronique (50) selon l'une des revendications précédentes,
**caractérisée en ce**
**que** la partie tête (24) présente une saille (28) qui entre en contact avec la clé mécanique (40) lors du mouvement de celle-ci dans la zone de travail (26), de sorte que la partie tête (24) est déplacée hors du logement (21).

9. Clé électronique (50) selon la revendication 6 ou 8,
**caractérisée en ce**
**qu'**une rainure (29) est disposée sur le palier (27), laquelle est associée à la saillie (28), la saillie (28) étant libre et/ou sans contact avec la rainure (29) dans la position insérée du couvercle (20) et la saillie (28) se déplaçant à travers la rainure (29) lors d'une activation du mécanisme.

10. Clé électronique (50) selon l'une des revendications précédentes,
**caractérisée en ce**
**que** le réservoir d'énergie (13) est fixé au couvercle (20), une liaison avec le réservoir d'énergie (13) existant en particulier par l'intermédiaire de moyens de contact sur l'électronique (11) et/ou que le couvercle (20) présente une entretoise (31) qui présente un joint (22a) au moyen duquel l'intérieur (14) du boîtier (10) est rendu étanche.

11. Clé électronique (50) selon l'une des revendications précédentes,
**caractérisée en ce**
**que** le boîtier (10) présente à l'ouverture (30) du logement (21) et/ou que le boîtier (10) présente à l'ouverture d'insertion (32) du logement (21), à travers laquelle la clé mécanique (40) est guidée, un joint (22a).

12. Procédé pour détacher un couvercle (20) d'une clé électronique (50) qui sert à la communication avec un système de sécurité (70) d'un véhicule automobile (60), en particulier avec un système de contrôle d'accès (71) et/ou avec un système de contrôle d'autorisation de conduite (72),
la clé électronique (50) présentant un boîtier (10) à l'intérieur duquel est disposée une électronique (11),
un compartiment de réception (12) formé à l'intérieur du boîtier (10) étant prévu, dans lequel se trouve un réservoir d'énergie (13) pour l'alimentation en énergie électrique de l'électronique (11),
le couvercle (20) étant fixé au boîtier (10) de manière détachable et fermant de manière étanche le compartiment de réception (12) dans une position insérée du couvercle (20),
le boîtier (10) étant formé avec un logement (21) dans lequel est logée une clé mécanique (40),
**comprenant les étapes suivantes** :
un premier mouvement de la clé mécanique (40) à l'intérieur du logement (21) d'une position introduite (1) dans une position de travail (2), lors duquel la clé mécanique (40) dépasse partiellement du logement (21),
un deuxième mouvement de la clé mécanique (40) dans sa position de travail (2), lors duquel un mécanisme disposé à l'intérieur du logement (21) est actionné, de sorte que la fixation du couvercle (20) est détachée du côté intérieur du boîtier (10), un joint (22) étant disposé entre le couvercle (20) et le boîtier (10), lequel joint (22) exerce dans la position insérée du couvercle (20) une force telle sur le boîtier (10) qu'après activation du mécanisme, le couvercle (20) se détache au moins partiellement du boîtier (10) et est éjecté du boîtier (10),
**caractérisé en ce**
lors de son deuxième mouvement, la clé est tournée et/ou pivotée et/ou basculée.

13. Procédé selon la revendication 12,
**caractérisé en ce**
**que** le premier mouvement est un mouvement de translation qui est différent du deuxième mouvement.

14. Procédé selon la revendication 12 ou 13,
**caractérisé en ce**
**qu'**un couvercle (20) d'une clé électronique (50) est détaché selon l'une des revendications 1 à 11.
